# EUROPÄISCHE PATENTSCHRIFT

(11) **EP 3 498 065 B1**
(45) Veröffentlichungstag und Bekanntmachung des Hinweises auf die Patenterteilung: **21.04.2021**
(21) Anmeldenummer: 18211667.3
(22) Anmeldetag: 11.12.2018
(51) Int. Cl.: A01B 59/043, A01B 59/00

(54) **VERFAHREN ZUR BEWEGUNGSSTEUERUNG EINES DREIPUNKT-KRAFTHEBERS EINES TRAKTORS**
METHOD FOR CONTROLLING THE MOVEMENT OF A THREE-POINT HYDRAULIC LIFT OF A TRACTOR
PROCÉDÉ DE COMMANDE DE MOUVEMENT D'UN RELEVAGE À TROIS POINTS D'UN TRACTEUR

(30) Priorität: 13.12.2017 DE 102017222653
(43) Veröffentlichungstag der Anmeldung: 19.06.2019
(73) Patentinhaber: Deere & Company, Moline, IL 61265 (US)
(72) Erfinder: Gresch, Valentin, 68163 Mannheim (DE)
(74) Vertreter: Dehnhardt, Florian Christopher

(56) Entgegenhaltungen:
- EP-A1- 1 095 549
- EP-A1- 1 360 886
- DE-A1- 10 120 732
- DE-A1-102014 113 448
- Anonymous: "all in one attachment? is it possible? - Page 2", , 1 August 2014 (2014-08-01), XP055665264, Retrieved from the Internet: URL:https://www.tractorbynet.com/forums/at tachments/317416-all-one-attachment-possib le-2.html#post3851971 [retrieved on 2020-02-05]

## Beschreibung

Die Erfindung betrifft ein Verfahren zur Bewegungssteuerung eines Dreipunkt-Krafthebers eines Traktors.

Aus DE 197 47 949 A1 ist ein Traktor mit einem Dreipunkt-Kraftheber in Form einer Anbauvorrichtung mit einem Oberlenker und zwei Unterlenkern bekannt. An der Anbauvorrichtung ist ein Gerät zur Bodenbearbeitung angehängt. Um einen Bediener bei der Bewegungssteuerung der Anbauvorrichtung zu entlasten, wird eine Soll-Längeneinstellung des Oberlenkers automatisch gesteuert EP1360886 beschreibt die Funktionalität einer Hexapod-Hitch. Der vorliegenden Erfindung liegt die Aufgabe zugrunde, eine für einen Bediener einfache und intuitive Einstellung eines an einem Dreipunkt-Kraftheber angehängten Anbaugerätes zu erreichen.

Diese Aufgabe wird durch ein Verfahren mit den Merkmalen des Patentanspruchs 1 gelöst.

Das Verfahren bewirkt eine Bewegungssteuerung eines Dreipunkt-Krafthebers, welcher an einem Traktor angeordnet ist und zwei Unterlenker sowie einen Oberlenker zur Aufnahme eines Anbaugeräts aufweist. Zur Bewegungssteuerung wird ein Bedienhebel verwendet, der insbesondere am Traktor (z.B. in einer Fahrerkabine) angeordnet ist. Benutzerseitige Bewegungen des Bedienhebels werden in Bewegungen des Dreipunkt-Krafthebers umgesetzt derart, dass bei einer ersten Betätigungsbewegung des Bedienhebels das Anbaugerät entlang einer ausschließlich translatorisch ausgeführten Bewegungsbahn translations- bzw. linearbewegt wird, während bei einer zweiten Betätigungsbewegung des Bedienhebels das Anbaugerät entlang einer ausschließlich rotatorisch ausgeführten Bewegungsbahn bezüglich einer Schwenkachse gekippt bzw. schwenkbewegt wird.

Somit ist mittels einer einzigen Bedieneinrichtung in Form eines beweglichen Bedienhebels eine Ansteuerung des Dreipunkt-Krafthebers mit mehreren Freiheitsgraden möglich. Hierdurch ist ein Benutzer beim Führen des Traktors erheblich entlastet, wenn er mittels des Bedienhebels und des Dreipunkt-Krafthebers ein am Traktor angehängtes Anbaugerät in eine gewünschte Soll-Position manövrieren möchte. Gleichzeitig ist die Bewegungssteuerung des Dreipunkt-Krafthebers und folglich auch des Anbaugeräts besonders intuitiv möglich, da unterschiedliche Bewegungen des Bedienhebels einer translatorischen bzw. linearen Bewegungsbahn entlang der Traktor-Hochrichtung des Anbaugeräts oder einer Kipp- bzw. Schwenkbewegung des Anbaugeräts bezüglich einer Schwenkachse zugeordnet werden können. Wie erwähnt, entspricht eine spezifische Betätigungsbewegung des Bedienhebels einer gewünschten Bewegung des Anbaugeräts. Ein Bediener bzw. Benutzer des Bedienhebels kann sich deshalb darauf konzentrieren, eine gewünschte Position und Schwenk- bzw. Kipplage des Anbaugeräts einzustellen, ohne dass er sich darum kümmern muss, welche Bestandteile oder Stellelemente (z.B. mittels hydraulischer Aktuatoren) des Dreipunkt-Krafthebers zu betätigen sind. Diese direkte Einstellung des Anbaugeräts ist für den Benutzer besonders bedienungsfreundlich und komfortabel. Die intuitive Einstellung einer gewünschten Position und Kipplage des Anbaugeräts mittels einer Betätigungsbewegung des Bedienhebels vermeidet etwaige Ungenauigkeiten bei der Einstellung des Anbaugeräts ebenso wie zeitaufwändige Einstellungskorrekturen seitens des Benutzers.

Die Begriffe "erste" und "zweite" Betätigungsbewegung unterscheiden sich insbesondere hinsichtlich einer unterschiedlichen Bewegungsart oder einer unterschiedlichen Bewegungsrichtung des Bedienhebels.

Der Bedienhebel ist vorzugsweise als ein schwenkbarer Hebel, als ein Joystick oder dergleichen ausgebildet. Der Traktor dient üblicherweise landwirtschaftlichen Zwecken mit einem an dem Dreipunkt-Kraftheber angehängten Anbaugerät, bei dem es sich z.B. um einen Düngerstreuer, ein bodeneingreifendes Arbeitsgerät wie etwa einen Pflug, eine Einzelkornsämaschine, ein Schiebeschild oder dergleichen handeln kann. Der Dreipunkt-Kraftheber ist vorzugsweise als Heck- oder Frontkraftheber ausgebildet.

Die translatorisch ausgeführte Bewegungsbahn des Anbaugeräts ist parallel zu einer Hochrichtung des Traktors ausgerichtet. Vorzugsweise ist diese Bewegungsbahn parallel zu einer vertikalen Hochachse des Traktors angeordnet.

Weitere vorteilhafte Ausgestaltungen des erfindungsgemäßen Verfahrens gehen aus den Unteransprüchen hervor.

Bei einer weiteren, d.h. dritten Betätigungsbewegung des Bedienhebels wird das Anbaugerät entlang einer überwiegend translatorisch ausgeführten Bewegungsbahn in einer Querrichtung des Traktors bewegt. Hierdurch ermöglicht der Bedienhebel zusätzliche Freiheitsgrade bei der Ansteuerung des Dreipunkt-Krafthebers. Die Bewegungsbahn ist zumindest überwiegend translatorisch, soweit eine ausschließlich translatorisch ausgeführte Bewegungsbahn technisch nicht vollständig realisierbar ist. Dabei wird aber ein rotatorischer Bewegungsanteil so weit wie möglich reduziert. Die Traktor-Querrichtung ist vorzugsweise parallel zu einer horizontalen Querachse des Traktors angeordnet. Weiterhin ist die Traktor-Querrichtung vorzugsweise rechtwinklig zu einer Längsrichtung oder horizontalen Längsachse des Traktors angeordnet. Die dritte Betätigungsbewegung unterscheidet sich von der ersten und zweiten Betätigungsbewegung insbesondere hinsichtlich einer unterschiedlichen Bewegungsart oder einer unterschiedlichen Bewegungsrichtung des Bedienhebels.

Vorzugsweise kann das Anbaugerät wahlweise um eine von mehreren auswählbaren Schwenkachsen (z.B. parallel zur Traktor-Querrichtung oder parallel zur Traktor-Längsrichtung) schwenkbewegt werden. Hierdurch ermöglicht der Bedienhebel mindestens einen weiteren Freiheitsgrad bei der Ansteuerung des Dreipunkt-Krafthebers, und eine benutzerfreundliche Handhabung des Bedienhebels wird weiter unterstützt.

Die Auswahl der Schwenkachse erfolgt vorzugsweise mittels eines Bedienelements (z.B. Funktionstaste). Dieses vorgenannte Bedienelement ist insbesondere am Bedienhebel selbst als zusätzliche Funktionstaste angeordnet.

In einer bevorzugten Ausführungsform ist die vorgenannte Schwenkachse parallel zur Traktor-Querrichtung angeordnet. Hierdurch lässt sich das Anbaugerät auf intuitive Weise bezüglich der Traktor-Querrichtung zum Traktor hin und vom Traktor weg schwenken bzw. kippen.

In einer weiteren bevorzugten Ausführungsform ist eine weitere auswählbare Schwenkachse parallel zur Traktor-Längsrichtung angeordnet, welche quer zur Traktor-Querrichtung und quer zur Traktor-Hochrichtung verläuft. Hierdurch lässt sich das Anbaugerät auf intuitive Weise bezüglich der Traktor-Längsrichtung nach rechts und links schwenken bzw. kippen.

Hinsichtlich der rotatorisch ausgeführten Bewegungsbahn des Anbaugeräts bezüglich einer Schwenkachse ist vorzugsweise vorgesehen, dass der zugehörige Drehpunkt der Schwenkachse im Raum vom Benutzer unterschiedlich vorgegeben bzw. konfiguriert werden kann. So kann beispielsweise im Falle eines Düngerstreuers als Anbaugerät vorgegeben werden, dass bei einer Verschwenkung bzw. Verkippung bezüglich einer Schwenkachse parallel zur Traktor-Querrichtung der Drehpunkt der Schwenkachse dem Dünger-Abwurfpunkt entspricht.

Vorteilhaft weist der Bedienhebel eine unbetätigte Neutral-Lage auf. Die spezifischen Betätigungsbewegungen (z.B. erste, zweite oder dritte) für die unterschiedlichen Bewegungsbahnen des Anbaugeräts sind dann jeweils bezüglich der unbetätigten Neutral-Lage in zwei entgegengesetzte Richtungen möglich. Dies unterstützt eine bedienungsfreundliche Einstellung des jeweiligen Anbaugeräts. Beispielsweise kann der Bedienhebel derart ausgebildet sein, dass dessen erste Betätigungsbewegung abhängig von der Bewegungsrichtung bezüglich einer Neutral-Lage einem Anheben oder Absenken des Anbaugeräts entlang einer translatorischen Bewegungsbahn (z.B. Hochrichtung) entspricht. Im Falle der zweiten Betätigungsbewegung kann abhängig von der Bewegungsrichtung des Bedienhebels bezüglich einer Neutral-Lage das Anbaugerät bezüglich einer Schwenkachse in zwei entgegengesetzte Schwenkrichtungen gekippt bzw. geschwenkt werden. Im Falle der dritten Betätigungsbewegung kann abhängig von der Bewegungsrichtung des Bedienhebels bezüglich einer Neutral-Lage das Anbaugerät entlang der Traktor-Querrichtung in zwei entgegengesetzte Richtungen, d.h. entweder nach rechts oder nach links, bewegt werden.

In einer bevorzugten Ausführungsform wird eine spezifische Betätigungsbewegung zusätzlich dazu genutzt, durch einen Bediener des Bedienhebels eine Soll-Position oder Soll-Schwenklage des Anbaugeräts als eine Soll-Größe vorgeben zu können. Dabei liegt die Soll-Position oder die Soll-Schwenklage insbesondere entlang der ausgeführten Bewegungsbahn des Anbaugeräts. Hierdurch ist ein einfaches und intuitives Manövrieren des Anbaugeräts in eine von dem Benutzer gewünschte Soll-Position beispielsweise entlang der Traktor-Hochrichtung unterstützt. Gleiches gilt für eine gewünschte Soll-Schwenklage des Anbaugeräts bezüglich einer Schwenkachse (z.B. Traktor-Längsrichtung oder Traktor-Querrichtung).

Weiter vorzugsweise wird eine Betätigungsbewegung des Bedienhebels dazu verwendet, seitens eines Benutzers eine Soll-Verfahrgeschwindigkeit des Anbaugeräts entlang einer ausgeführten Bewegungsbahn vorgeben zu können. Hierbei wird also eine Soll-Verfahrgeschwindigkeit des Anbaugeräts als Soll-Größe ermittelt. Die Bewegungsrichtung des Anbaugeräts (z.B. entlang der Traktor-Hochrichtung) ist dabei durch die vom Benutzer gewählte spezifische Betätigungsbewegung des Bedienhebels eindeutig definiert.

Vorzugsweise weicht die tatsächliche Ist-Verfahrgeschwindigkeit beim Einstellen einer gewünschten Soll-Position oder Soll-Schwenklage des Anbaugeräts von der benutzerseitig vorgegebenen Soll-Geschwindigkeit ab. Diese Abweichung kann von spezifischen Parametern, Einstellungen, physikalischen Größen und technischen Merkmalen - nachfolgend kurz Parameter - am Traktor, Dreipunkt-Kraftheber und Anbaugerät abhängig sein.

Insbesondere wird die tatsächliche Ist-Verfahrgeschwindigkeit des Anbaugeräts auf mindestens einen Parameter physikalisch sinnvoll abgestimmt. Ist beispielsweise ein kleines, kompaktes oder leichtes Anbaugerät angebaut, kann eine gewünschte Soll-Position des Anbaugeräts mit verhältnismäßig hoher Ist-Verfahrgeschwindigkeit eingestellt werden. Ist hingegen ein schweres Anbaugerät oder ein Anbaugerät mit einem bezüglich des Traktors relativ weit entfernten oder relativ hoch angeordneten Schwerpunkt angebaut, wird die Einstellung der Soll-Position des Anbaugeräts vorzugsweise langsamer und sanfter durchgeführt, um ein etwaiges Aufschwingen der Traktor-Anbaugerät-Kombination zu vermeiden. Auch kann das Verhältnis der Massen des Traktors und des Anbaugeräts berücksichtigt werden. Außerdem ist eine Berücksichtigung der Masthöhe vorteilhaft, da eine geringe Masthöhe bei gleicher Verfahrgeschwindigkeit des Oberlenkers ein schnelleres Schwenken bzw. Verkippen des Anbaugeräts bewirkt als eine große Masthöhe. Entsprechend ist auch eine Berücksichtigung der verwendeten Anlenkstelle des Oberlenkers an dem Traktor vorteilhaft, da eine tiefere Anlenkstelle bei gleicher Verfahrgeschwindigkeit des Oberlenkers ein schnelleres Schwenken bzw. Verkippen des Anbaugeräts bewirkt als eine höher angeordnete Anlenkstelle.

Optional kann über eine Druckmessung in hydraulischen Aktuatoren des Dreipunkt-Krafthebers und Kenntnis der aktuellen Kinematik des Dreipunkt-Krafthebers eine zur Verstellung des Dreipunkt-Krafthebers notwendige Verstellkraft berechnet werden. Bei bodeneingreifenden Anbaugeräten (z.B. einem Pflug) kann durch den höheren Kraftaufwand detektiert werden, wann ein Anbaugerät in den Boden eingreift. Die Ist-Verfahrgeschwindigkeit des Anbaugeräts kann dann entsprechend angepasst werden.

Um einen Soll-Wert der ausgewählten Soll-Größe mit geringem Bedienungsaufwand vorgeben und mit geringem technischen Aufwand ermitteln zu können, ist es vorteilhaft, den Soll-Wert in Abhängigkeit von einem Betätigungsweg des Bedienhebels bezüglich einer unbetätigten Neutral-Lage zu ermitteln. Ein bestimmter Betätigungsweg des aus seiner Neutral-Lage betätigten Bedienhebels entspricht dann beispielsweise einer durch den Benutzer vorgegebenen Soll-Position oder Soll-Schwenklage des Anbaugeräts entlang seiner ausgeführten Bewegungsbahn. Ebenso können über unterschiedliche Betätigungswege unterschiedliche Soll-Verfahrgeschwindigkeiten des Anbaugeräts vorgegeben werden. Dabei wird die tatsächliche Ist-Verfahrgeschwindigkeit vorzugsweise solange beibehalten, bis der Benutzer den Bedienhebel wieder in die Neutral-Lage überführt oder bis ein den Kraftheber bewegender Aktuator seinen Endanschlag erreicht. Mittels einer geeigneten Sensorik am Dreipunkt-Kraftheber kann dabei die Ist-Verfahrgeschwindigkeit der betroffenen Aktuatoren vor Erreichen der Endanschläge derart reduziert werden, dass stoßartige Bewegungen des Dreipunkt-Krafthebers und des Anbaugeräts vermieden werden.

Insbesondere wird mindestens einer der nachfolgenden Parameter bei der Durchführung des Verfahrens berücksichtigt:
- eine aktuelle Kraftheberkonfiguration (z.B. Anlenkstelle des Oberlenkers an dem Traktor, Anlenkstelle des Unterlenkers für eine Hubstrebe),
- eine aktuelle Kraftheberkinematik (z.B. Oberlenkerwinkel, Kraftheberposition mittels Ausfahrlänge von Hubzylindern oder Winkellage eines Hubarmes, Ausfahrlänge oder Winkellage von Seitenstabilisierungsstreben, Ausfahrlänge oder Winkellage von Hubstreben),
- eine Masse und/oder Schwerpunktlage des Anbaugeräts,
- eine Masse und/oder Schwerpunktlage des Traktors,
- eine Masthöhe des Anbaugeräts,
- eine Länge des Anbaugeräts,
- eine Position eines Arbeitswerkzeugs oder einer Ausbringeinheit des Anbaugeräts (bei bodeneingreifenden Anbaugeräten oder einem Düngerstreuer mit einem Wurfteller) relativ zur Koppelebene, in der sich die Kopplungsstellen des Oberlenkers und der Unterlenker zum Anbaugerät befinden,
- Hydraulikdrücke in Aktuatoren des Dreipunkt-Krafthebers,
- Leistungsparameter des Traktors, z.B. Motordrehzahl, Systemdruck des Hydrauliksystems, Drehzahl und Stellung der Hydraulikpumpe, Öltemperatur.

Die vorgenannten Parameter können als bekannte Voreinstellungen durch den Benutzer mitgeteilt (konfiguriert) oder durch Sensorsignale mitgeteilt (kalibriert) werden, können durch sensorische Erfassung ermittelt oder über einen Datenbus (z.B. CAN oder ISOBUS) des Traktors und/oder des Anbaugeräts bereitgestellt werden. Denkbar ist auch ein drahtloser Zugriff auf eine die Parameter enthaltende Datenbank, beispielsweise eine Daten-Cloud.

Vorteilhaft werden mehrere Funktions-Modi bereitgestellt, mittels derer festgelegt ist, welche Soll-Größe (z.B. Soll-Position oder Soll-Verfahrgeschwindigkeit des Anbaugeräts) durch die Bewegungen des Bedienhebels ermittelt werden soll. Somit können die Betätigungsbewegungen des Bedienhebels technisch einfach wahlweise unterschiedlichen Soll-Größen zugeordnet werden. Der wahlweise veränderbare Funktions-Modus wird beispielsweise an einem Bedienelement eingestellt. Dieses Bedienelement ist vorzugsweise als eine zusätzliche Funktionstaste an dem Bedienhebel selbst angeordnet, um eine einfache Ansteuerung des Anbaugeräts durch den Benutzer zu unterstützen.

Vorzugsweise weist der Traktor eine geeignete Anordnung zur Durchführung des Verfahrens auf. Insbesondere enthält diese Anordnung eine Steuereinheit (z.B. Steuergerät mit mindestens einem geeigneten Regelalgorithmus) auf, welche Signale von dem Bedienhebel, Konfigurationssignale des Benutzers, Signale von einer Sensorik des Dreipunkt-Krafthebers und ggf. weitere Signale empfängt. Abhängig von diesen empfangenen und verarbeiteten Signalen sowie ggf. berücksichtigten Parametern kann die Steuereinheit dann Steuersignale an Aktuatoren des Dreipunkt-Krafthebers senden, um Betätigungsbewegungen des Bedienhebels und somit eine gewünschte Soll-Einstellung des Anbaugeräts in entsprechende Bewegungen des Dreipunkt-Krafthebers umzusetzen. In der Steuereinheit ist deshalb vorzugsweise ein Regelalgorithmus implementiert, der aus den vorgegebenen Betätigungsbewegungen und Signalen des Bedienhebels sowie ggf. mindestens einem der oben genannten Parameter die notwendigen Stell- und Steuersignale für die einzelnen Aktuatoren des Dreipunkt-Krafthebers berechnet.

Die Steuereinheit steuert vorzugsweise Aktuatoren (z.B. hydraulisch oder elektrisch) mindestens eines der folgenden Bestandteile des Dreipunkt-Krafthebers bedarfsweise an: zwei Hubzylinder, einen Oberlenker, eine oder zwei Seitenstabilisierungsstreben und zwei Hubstreben. Dabei kann z.B. eine Translationsbewegung des Anbaugeräts entlang der Traktor-Hochrichtung durch eine geeignete Aktuator-Ansteuerung bezüglich der Hubzylinder und/oder des Oberlenkers und/oder der Hubstreben realisiert werden. Beispielsweise kann eine Bewegung des Anbaugeräts entlang der Traktor-Querrichtung durch eine entsprechende Aktuator-Ansteuerung der mindestens einen Seitenstabilisierungsstrebe realisiert werden. Eine Schwenk- bzw. Kippbewegung des Anbaugeräts bezüglich einer Schwenkachse parallel zur Traktor-Querrichtung kann durch eine geeignete Aktuator-Ansteuerung bezüglich der Hubzylinder und/oder des Oberlenkers und/oder der Hubstreben realisiert werden. Eine Schwenk- bzw. Kippbewegung des Anbaugeräts bezüglich einer Schwenkachse parallel zur Traktor-Längsrichtung kann durch eine geeignete Aktuator-Ansteuerung bezüglich der Hubzylinder und/oder der Hubstreben realisiert werden.

Das erfindungsgemäße Verfahren wird im Folgenden anhand der beigefügten Zeichnungen näher erläutert. Dabei sind hinsichtlich ihrer Funktion übereinstimmende bzw. vergleichbare Bauteile mit denselben Bezugszeichen gekennzeichnet. Es zeigen:
- Fig. 1: eine schematische Seitenansicht von Bestandteilen eines Dreipunkt-Krafthebers,
- Fig. 2: eine schematische Draufsicht von Bestandteilen eines Dreipunkt-Krafthebers,
- Fig. 3: eine Bewegungs-Konfiguration des Bedienhebels zur Bewegungssteuerung des Dreipunkt-Krafthebers, und
- Fig. 4: eine blockschaltbildartige Anordnung zur Durchführung des Verfahrens.

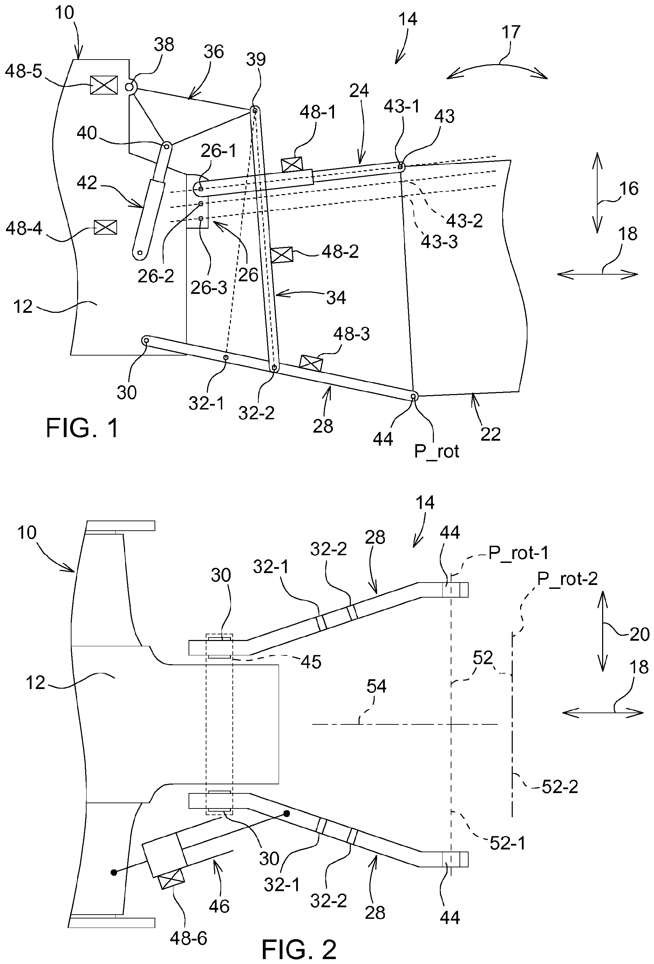

In Fig. 1 ist ein Traktor 10 mit einer Tragstruktur 12 (z.B. Rahmen Chassis, etc.) teilweise und schematisch dargestellt. An der Tragstruktur 12 ist ein nicht maßstabsgetreu und prinzipiell dargestellter Dreipunkt-Kraftheber - kurz Kraftheber 14 - am Heck des Traktors 10 angebracht. Von dem Kraftheber 14 ist in Fig. 1 eine ebene Kinematik in einer Ebene durch eine Hochrichtung 16 und eine Längsrichtung 18 des Traktors 10 aufgespannt. Dabei verläuft die Längsrichtung 18 insbesondere parallel zu einer Fahrzeug-Horizontalen oder Längsachse des Traktors 10, während die Hochrichtung 16 insbesondere parallel zu einer Fahrzeug-Vertikalen oder Hochachse des Traktors 10 verläuft. Entlang einer quer zur Hochrichtung 16 und Längsrichtung 18 angeordneten Richtung verläuft eine Querrichtung 20 des Traktors 10 (Fig. 2). Dabei verläuft die Querrichtung 20 insbesondere parallel zu einer horizontalen Querachse des Traktors 10. In Fig. 1 ist an dem Traktor 10 mittels des Krafthebers 14 ein schematisch dargestelltes Anbaugerät 22 angebaut.

Der Kraftheber 14 umfasst einen (vorzugsweise hydraulisch) verstellbaren Oberlenker 24, der über eine Anlenkposition 26-1 an der Tragstruktur 12 des Traktors 10 gelenkig befestigt ist. Die Anlenkstelle 26 ermöglicht entlang der Hochrichtung 16 drei unterschiedliche Anlenkpositionen 26-1, 26-2, 26-3 für den Oberlenker 20, wobei in dem Ausführungsbeispiel die Anlenkposition 26-1 benutzt ist.

Weiterhin umfasst der Kraftheber 14 zwei in Querrichtung 20 voneinander beabstandete Unterlenker 28. Jeder Unterlenker 28 ist über ein Lager 30 mit der Tragstruktur 12 gelenkig verbunden. Der Unterlenker 28 weist zwei unterschiedliche Gelenkpositionen 32-1 und 32-2 zur wahlweisen Anlenkung einer (vorzugsweise hydraulisch) verstellbaren Hubstrebe 34 auf. Im dargestellten Ausführungsbeispiel ist die Hubstrebe 34 an der Gelenkposition 32-2 angelenkt. Der Unterlenker 28 ist über die Hubstrebe 34 mit einer Anlenkung 39 eines Hubarmes 36 gelenkig verbunden, der mit seinem anderen Ende über eine Anlenkung 38 gelenkig mit der Tragstruktur 12 des Traktors 10 verbunden ist. Der Hubarm 36 ist über einen in einem Hubarmgelenk 40 angreifenden und gegen die Tragstruktur 12 abgestützten hydraulischen Hubzylinder 42 relativ zur Tragstruktur 12 schwenkbar. Bei einer entsprechenden Betätigung des Hubzylinders 42 wird der Hubarm 36 geschwenkt, so dass dessen Schwenkbewegungen über die Anlenkung 39 an der Hubstrebe 34 auf den Unterlenker 28 übertragen werden.

Der Oberlenker 24 ist über eine obere Kopplungsstelle 43 und der Unterlenker 34 über eine untere Kopplungsstelle 44 mit dem Anbaugerät 22 verbunden. Die obere Kopplungsstelle 43 bietet in dem Ausführungsbeispiel drei verschiedene Kopplungspositionen 43-1, 43-2 und 43-3 für drei unterschiedlich mögliche Anordnungen des Oberlenkers 24. Hierdurch sind zwischen der unteren Kopplungsstelle 44 und der oberen Kopplungsstelle 43 in dem Ausführungsbeispiel drei unterschiedliche Masthöhen M möglich. In weiteren Ausführungsbeispielen kann auch die Kopplungsposition 43-2 oder 43-3 über den Oberlenker 24 mit einer beliebigen Anlenkposition 26-1, 26-2, 26-3 verbunden werden.

In Fig. 2 ist als ein weiterer Bestandteil des Krafthebers 14 eine hydraulisch verstellbare Seitenstabilisierungstrebe 46 dargestellt, welche durch eine entsprechende Ansteuerung seitliche Bewegungen des Krafthebers 14 und somit auch seitliche Translations- bzw. Linearbewegungen des Anbaugeräts 22 entlang der Querrichtung 20 mit einer geringen rotatorischen Bewegungskomponente unterstützt. In einem weiteren, hier nicht dargestellten Ausführungsbeispiel sind an der Tragstruktur 12 zwei verstellbare Seitenstabilisierungsstreben angeordnet, welche jeweils mit einem Unterlenker 28 gekoppelt sind, um letztere für eine gewünschte Bewegung des Anbaugeräts 22 entlang der Querrichtung 20 zu verstellen.

In Fig. 1 und Fig. 2 sind stellvertretend für eine geeignete Sensorik einzelne schematisch dargestellte Sensoren 48-1, 48-2, 48-3, 48-4, 48-5, 48-6 an der Tragstruktur 12 und an dem Kraftheber 14 angeordnet. Die Sensorik kann auch zusätzliche, hier nicht dargestellte Sensoren aufweisen und auch teilweise an dem Anbaugerät 22 angeordnet sein. Die Sensorik dient insbesondere zur Erfassung der Kinematik des Krafthebers 14. Einzelne Sensoren können als Inertialsensor zur Erfassung von Beschleunigung und Drehrate, als elektronische Wasserwaage zur Erfassung der Winkellage des Traktors 10 oder eines Bauteils relativ zum Gravitationsfeld oder als Winkelsensor zur Erfassung der relativen Lage zweier Bauteile zueinander ausgebildet sein.

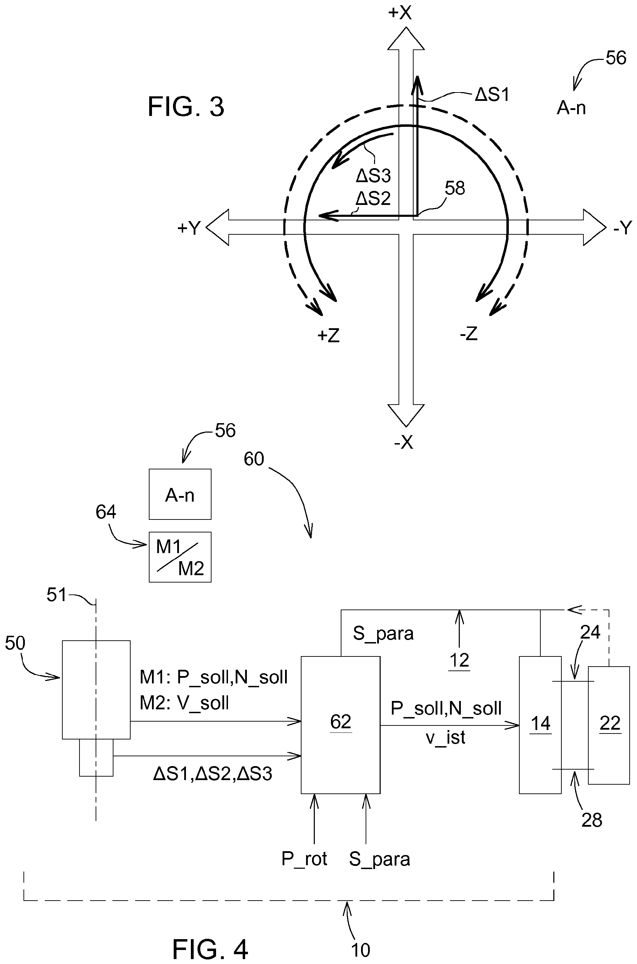

Fig. 3 zeigt auswählbare Bewegungsachsen X, Y, Z eines Bedienhebels 50, welcher in Fig. 4 schematisch dargestellt ist und z.B. als sogenannter Joystick oder anderweitige Betätigungsvorrichtung mit mehreren möglichen Bewegungsrichtungen entlang der Achsen X, Y, Z ausgebildet ist.

Die X-Achse repräsentiert eine erste (translatorische) Betätigungsbewegung des Bedienhebels 50. Die Z-Achse repräsentiert eine zweite (rotatorische) Betätigungsbewegung des Bedienhebels 50 um seine Hebelachse 51 (Fig. 4). Die Y-Achse repräsentiert eine dritte (translatorische) Betätigungsbewegung des Bedienhebels 50.

Die Betätigungsbewegungen des Bedienhebels 50 werden in Bewegungen des Krafthebers 14 umgesetzt. Diese Umsetzung erfolgt derart, dass eine Betätigungsbewegung des Bedienhebels 50 entlang der X-Achse eine ausschließlich translatorische Bewegungsbahn des Anbaugeräts 22 entlang der Hochrichtung 16 bewirkt. Eine Betätigungsbewegung des Bedienhebels 50 entlang der Y-Achse bewirkt eine im Wesentlichen translatorische Seitenbewegung des Anbaugeräts 22 entlang der Querrichtung 20, wobei bei dieser Bewegungsbahn auch eine geringe rotatorische Bewegungskomponente bezüglich einer parallel zur Hochrichtung 16 angeordneten Rotationsachse vorhanden ist, da die Unterlenker 28 an einem bolzenartigen Lagerelement 45 über die Lager 30 kugelgelenkartig gelagert sind. Eine rotatorische Betätigungsbewegung des Bedienhebels 50 um seine Hebelachse 51, d.h. entlang der Z-Achse bewirkt eine ausschließlich rotatorisch ausgeführte Bewegungsbahn, d.h. eine Schwenk- bzw. Kippbewegung des Anbaugeräts 22 bezüglich einer Schwenkachse. Diese Schwenkachse ist vorzugsweise eine parallel zur Querrichtung 20 verlaufende Achse 52, beispielsweise im Bereich der unteren Kopplungsstellen 44 (Achse 52-1) in einem Drehpunkt P_rot-1 oder in einem anderen Drehpunkt (z.B. Achse 52-2 mit dem Drehpunkt P_rot-2). Die genaue Lage des Drehpunktes P_rot in einer durch die Hochrichtung 16 und die Längsrichtung 18 aufgespannten Ebene kann benutzerseitig festgelegt bzw. konfiguriert werden.

In Abhängigkeit eines benutzerseitig veränderbaren Achsen-Status A-n kann dieselbe rotatorische Betätigungsbewegung des Bedienhebels 50 entlang der Z-Achse eine Schwenk- bzw. Kippbewegung des Anbaugeräts 22 wahlweise um eine andere, zur Schwenkachse 52 nicht-parallel angeordnete Schwenkachse bewirken. Diese andere Schwenkachse ist beispielsweise eine parallel zur Längsrichtung 18 verlaufende Achse 54. Vorzugsweise kann die genaue Lage des Drehpunktes P_rot dieser Schwenkachse 54 in einer durch die Hochrichtung 16 und die Querrichtung 20 aufgespannten Ebene wiederum benutzerseitig festgelegt bzw. konfiguriert werden.

Der Achsen-Status A-n lässt sich durch Betätigen einer Funktionstaste 56 verändern, so dass über den Achsen-Status A-n diejenige Ausrichtung einer Schwenkachse ausgewählt wird, um welche das Anbaugerät 22 geschwenkt bzw. gekippt werden soll. Diese Auswahl ist in Fig. 3 durch zwei verschiedene Linien angedeutet. Beispielsweise ist die Volllinie der Z-Achse einer Schwenkbewegung des Anbaugeräts 22 bezüglich der Schwenkachse 52 zugeordnet, während die gestrichelte Linie der Z-Achse einer Schwenkbewegung des Anbaugeräts 22 bezüglich der Schwenkachse 54 zugeordnet ist.

Weiterhin ist Fig. 3 entnehmbar, dass der Bedienhebel 50 entlang der drei Bewegungsachsen X, Y und Z bezüglich einer zentralen Neutral-Lage 58 jeweils in zwei entgegengesetzte Richtungen (z.B. +X und -X entlang der X-Achse) beweglich ist. Für die nachfolgend genannten Bewegungsrichtungen des Bedienhebels 50 bezüglich der Neutral-Lage 58 ergeben sich folgende Bewegungen des Anbaugeräts 22:
+X: Anheben des Anbaugeräts 22 entlang der Hochrichtung 16,
-X: Absenken des Anbaugeräts 22 entlang der Hochrichtung 16,
+Y: Seitliches Bewegen des Anbaugeräts 22 entlang der Querrichtung 20 nach links (z.B. ausgehend von einer Vorwärts-Fahrtrichtung des Traktors 10),
-Y: Seitliches Bewegen des Anbaugeräts 22 entlang der Querrichtung 20 nach rechts (z.B. ausgehend von einer Vorwärts-Fahrtrichtung des Traktors 10),
+Z: Schwenken bzw. Kippen des Anbaugeräts 22 bezüglich einer Schwenkachse 52 zum Traktor 10 hin,
-Z: Schwenken bzw. Kippen des Anbaugeräts 22 bezüglich einer Schwenkachse 52 vom Traktor 10 weg,
+Z (A-n): Schwenken bzw. Kippen des Anbaugeräts 22 bezüglich einer Schwenkachse 54 nach links (z.B. ausgehend von einer Vorwärts-Fahrtrichtung des Traktors 10),
-Z (A-n): Schwenken bzw. Kippen des Anbaugeräts 22 bezüglich einer Schwenkachse 54 nach rechts (z.B. ausgehend von einer Vorwärts-Fahrtrichtung des Traktors 10).

Bei der Durchführung des Verfahrens erfolgt eine Bewegung des Anbaugeräts 22 immer nur entlang derjenigen Bewegungsbahn, welche durch eine Bewegungsachse X, Y oder Z bei entsprechender Betätigungsbewegung des Bedienhebels 50 und ggf. der Funktionstaste 56 vorgegeben ist. Hierzu werden bedarfsweise Aktuatoren einzelner verstellbarer Bestandteile des Krafthebers 14 angesteuert. Unabhängig von der Art der Aktuatorik (z.B. hydraulisch oder elektrisch) gelten hierbei folgende Zusammenhänge:
Bei Betätigungsbewegung des Bedienhebels 50 entlang der X-Achse können die Hubzylinder 42 und/oder die Hubstreben 34 und/oder der Oberlenker 24 aktuiert werden.

Bei Betätigungsbewegung des Bedienhebels 50 entlang der Y-Achse wird die Seitenstabilisierungsstrebe 46 aktuiert.

Bei Betätigungsbewegung des Bedienhebels 50 entlang der Z-Achse (und ausgewählter Schwenkung des Anbaugeräts 22 um eine Schwenkachse 52) können die Hubzylinder 42 und/oder die Hubstreben 34 und/oder der Oberlenker 24 aktuiert werden.

Bei Betätigung des Bedienhebels 50 entlang der Z-Achse nach betätigter Funktionstaste 56 (d.h. ausgewählter Schwenkung des Anbaugeräts 22 um eine Schwenkachse 54) können die Hubzylinder 42 und/oder die Hubstreben 34 aktuiert werden.

Die Aktuatorik wird dabei derart angesteuert, dass das Anbaugerät 22 beispielsweise bei einer Betätigungsbewegung des Bedienhebels 50 entlang der +X-Richtung ausschließlich entlang der Hochrichtung 16 angehoben und nicht etwa in unerwünschter Weise verschwenkt bzw. verkippt wird. Bei einer Betätigungsbewegung des Bedienhebels 50 entlang der Z-Richtung wird das Anbaugerät 22 ausschließlich bezüglich der ausgewählten Schwenkachse 52 oder 54 rotatorisch bewegt und nicht etwa in unerwünschter Weise angehoben oder abgesenkt.

Wünscht der Benutzer hingegen während einer translatorischen bzw. linearen Verstellbewegung des Anbaugeräts 22 bewusst dessen gleichzeitiges rotatorisches Verkippen (z.B. bei einem Ausheben eines Pfluges am Vorgewende), kann er diese kombinierte Bewegung des Anbaugeräts 22 durch eine Betätigungsbewegung des Bedienhebels 50 entlang der X-Achse und gleichzeitige Drehbewegung bezüglich der Hebelachse 51 bzw. Z-Achse realisieren.

Fig. 4 zeigt schematisch Bestandteile einer Anordnung 60 zur verfahrensgemäßen Verstellung des Anbaugeräts 22. Die Anordnung 60 weist u.a. den Bedienhebel 50 und eine Steuereinheit 62 (z.B. in Form eines Steuergerätes) auf.

Mittels des Bedienhebels 50 gibt der Benutzer eine gewünschte Soll-Position P_soll des Anbaugeräts 22 entlang der Hochrichtung 16 oder der Querrichtung 20 vor. Außerdem kann mittels des Bedienhebels 50 eine Soll-Neigung N_soll bzw. Soll-Schwenklage des Anbaugeräts 22 bezüglich einer Schwenkachse 52 oder wahlweise (mittels der Funktionstaste 56) einer Schwenkachse 54 vorgegeben werden. Wie bereits erwähnt, kann hierbei auch der jeweils gewünschte Drehpunkt P_rot der ausgewählten Schwenkachse 52, 54 im Raum benutzerabhängig konfiguriert bzw. definiert und in der Steuereinheit 62 durch eine entsprechende Aktuierung von Bestandteilen des Krafthebers 14 berücksichtigt werden.

Alternativ zu den vorgenannten Soll-Größen P_soll und N_soll kann der Benutzer festlegen, dass Bewegungen des Bedienhebels 50 einer vorgegebenen Soll-Verfahrgeschwindigkeit v_soll des Anbaugeräts 22 entlang der durch die spezifische Betätigungsbewegung des Bedienhebels 50 auszuführenden Bewegungsbahn des Anbaugeräts 22 entsprechen. Es existieren also mindestens zwei Modi für Bewegungen des Bedienhebels 50. Beispielsweise geben die Betätigungsbewegungen des Bedienhebels 50 in einem ersten Modus M1 die Soll-Größen P_soll und/oder N_soll vor, während - durch Betätigen einer zusätzlichen Funktionstaste 64 - in einem zweiten Modus M2 die Soll-Größe v_soll vorgeben. Durch wiederholtes Betätigen der Funktionstaste 64 kann zwischen beiden Modi gewechselt werden. In beiden Modi wird der jeweilige Wert der Soll-Größe dadurch ermittelt, dass in der Steuereinheit 62 ein Auslenkungsweg - beispielsweise der Weg Δs1, Δs2 oder Δs3 gemäß Fig. 3 - des Bedienhebels 50 ausgehend von seiner Neutral-Lage 58 ausgewertet wird.

Wie bereits erwähnt, kann die vom Benutzer vorgegebene Soll-Verfahrgeschwindigkeit v_soll abhängig von einzelnen, bereits beschriebenen Parametern durch eine tatsächliche Ist-Verfahrgeschwindigkeit v_ist ersetzt werden. Hierzu werden in der Steuereinheit 62 Parameter-Signale S_para empfangen und verarbeitet. Die Parameter-Signale S_para stehen stellvertretend für Parameter, Einstellungen, physikalische Größen und technische Merkmale im Zusammenhang mit dem Anbaugerät 22, dem Kraftheber 14 und dem Traktor 10, wie bereits beschrieben. Die Parameter-Signale S_para stammen beispielsweise von einer Sensorik, die an dem Traktor 10, dem Kraftheber 14 und ggf. auch dem Anbaugerät 22 angeordnet sein kann und u.a. die Sensoren 48-1 bis 48-5 gemäß Fig. 1 umfasst. Außerdem können Parameter-Signale S_para durch eine benutzerabhängige Konfiguration der Steuereinheit mitgeteilt werden. Die Steuereinheit 62 passt eine vorgegebene Soll-Verfahrgeschwindigkeit v_soll erforderlichenfalls an eine sinnvolle Ist-Verfahrgeschwindigkeit v_ist an. Beispielsweise kann dadurch ein etwaiges Aufschwingen der Kombination aus Traktor 10 und Anbaugerät 22 vermieden werden, wenn der Benutzer eine zu hohe Soll-Verfahrgeschwindigkeit vorgegeben hat.

## Patentansprüche

1. Verfahren zur Bewegungssteuerung eines Dreipunkt-Krafthebers (14), welcher an einem Traktor (10) angeordnet ist, wobei Bewegungen eines betätigten Bedienhebels (50) in Bewegungen des Dreipunkt-Krafthebers (14) umgesetzt werden, derart, dass
- bei einer ersten Betätigungsbewegung (X) des Bedienhebels (50) das Anbaugerät (22) entlang einer ausschließlich translatorisch ausgeführten Bewegungsbahn (16) parallel zu einer Hochrichtung (16) des Traktors (10) bewegt wird, und
- bei einer zweiten Betätigungsbewegung (Z) des Bedienhebels (50) das Anbaugerät (22) entlang einer ausschließlich rotatorisch ausgeführten Bewegungsbahn (17) bezüglich einer Schwenkachse (52, 54) schwenkbewegt wird.

2. Verfahren nach Anspruch 1, **dadurch gekennzeichnet, dass** bei einer dritten Betätigungsbewegung (Y) des Bedienhebels (50) das Anbaugerät (22) entlang einer überwiegend translatorisch ausgeführten Bewegungsbahn (20) in einer Querrichtung (20) des Traktors (10) bewegt wird.

3. Verfahren nach Anspruch 1 oder 2, **dadurch gekennzeichnet, dass** das Anbaugerät (22) wahlweise bezüglich einer von mehreren nicht-parallelen Schwenkachsen (52, 54) schwenkbewegt wird.

4. Verfahren nach wenigstens einem der vorhergehenden Ansprüche, **dadurch gekennzeichnet, dass** eine Schwenkachse (52) parallel zu einer Querrichtung (20) des Traktors (10) angeordnet ist.

5. Verfahren nach wenigstens einem der vorhergehenden Ansprüche, **dadurch gekennzeichnet, dass** eine Schwenkachse (54) parallel zu einer Längsrichtung (18) des Traktors (10) angeordnet ist.

6. Verfahren nach wenigstens einem der vorhergehenden Ansprüche, **dadurch gekennzeichnet, dass** in Abhängigkeit von einer Betätigungsbewegung (X, Y, z) des Bedienhebels (50) als Soll-Größe eine Soll-Position (P_soll) oder Soll-Schwenklage (N_soll) des Anbaugeräts (22) ermittelt wird.

7. Verfahren nach wenigstens einem der vorhergehenden Ansprüche, **dadurch gekennzeichnet, dass** in Abhängigkeit von einer Betätigungsbewegung (X, Y, Z) des Bedienhebels (50) als Soll-Größe eine Soll-Verfahrgeschwindigkeit (v_soll) des Anbaugeräts (22) entlang der Bewegungsbahn (16, 17, 20) des Anbaugeräts (22) ermittelt wird.

8. Verfahren nach Anspruch 6 oder 7, **dadurch gekennzeichnet, dass** ein Wert der Soll-Größe (P_soll, N_soll, v_soll) in Abhängigkeit von einem Betätigungsweg (Δs1, Δs2, Δs3) des Bedienhebels (50) bezüglich einer unbetätigten Neutral-Lage (58) ermittelt wird.

9. Verfahren nach wenigstens einem der Ansprüche 6 bis 8, **dadurch gekennzeichnet, dass** die zu ermittelnde Soll-Größe (P_soll, N_soll, v_soll) abhängig von einem veränderbaren Funktions-Modus (M1, M2) festgelegt wird.

## Claims

1. Method for controlling the movement of a three-point hydraulic lift (14) which is arranged on a tractor (10), wherein movements of an actuated operator control lever (50) are converted into movements of the three-point hydraulic lift (14) in such a manner that
- upon a first actuation movement (X) of the operator control lever (50), the attachment (22) is moved along an exclusively translational movement path (16) parallel to a vertical direction (16) of the tractor (10), and
- upon a second actuation movement (Z) of the operator control lever (50), the attachment (22) is pivoted along an exclusively rotational movement path (17) with respect to a pivot axis (52, 54).

2. Method according to Claim 1, **characterized in that** upon a third actuation movement (Y) of the operator control lever (50), the attachment (22) is moved along a predominantly translational movement path (20) in a transverse direction (20) of the tractor (10) .

3. Method according to Claim 1 or 2, **characterized in that** the attachment (22) is selectively pivoted with respect to one of a plurality of non-parallel pivot axes (52, 54).

4. Method according to at least one of the preceding claims, **characterized in that** one pivot axis (52) is arranged parallel to a transverse direction (20) of the tractor (10).

5. Method according to at least one of the preceding claims, **characterized in that** one pivot axis (54) is arranged parallel to a longitudinal direction (18) of the tractor (10).

6. Method according to at least one of the preceding claims, **characterized in that** a desired position (P_soll) or desired pivoting position (N_soll) of the attachment (22) is determined as the desired variable depending on an actuation movement (X, Y, Z) of the operator control lever (50).

7. Method according to at least one of the preceding claims, **characterized in that** a desired movement speed (v_soll) of the attachment (22) along the movement path (16, 17, 20) of the attachment (22) is determined as the desired variable depending on an actuation movement (X, Y, Z) of the operator control lever (50).

8. Method according to Claim 6 or 7, **characterized in that** a value of the desired variable (P_soll, N_soll, v_soll) is determined depending on an actuation travel (Δs1, Δs2, Δs3) of the operator control lever (50) with respect to an unactuated neutral position (58).

9. Method according to at least one of Claims 6 to 8, **characterized in that** the desired variable (P_soll, N_soll, v_soll) to be determined is defined depending on a variable function mode (M1, M2).

## Revendications

1. Procédé de commande de mouvement d'un relevage à trois points (14) qui est disposé sur un tracteur (10), des mouvements d'un levier de commande (50) étant convertis en mouvements du relevage à trois points (14), de telle sorte que
- pour un premier mouvement d'actionnement (X) du levier de commande (50), l'outil porté (22) est déplacé le long d'une trajectoire (16) réalisée exclusivement en translation en parallèle à une direction vers le haut (16) du tracteur (10), et
- pour un deuxième mouvement d'actionnement (Z) du levier de commande (50), l'outil porté (22) est amené à pivoter par rapport à un axe de pivotement (52, 54) le long d'une trajectoire (17) réalisée exclusivement en rotation.

2. Procédé selon la revendication 1, **caractérisé en ce que** pour un troisième mouvement d'actionnement (Y) du levier de commande (50), l'outil porté (22) est déplacé le long d'une trajectoire (20) réalisée surtout en translation dans une direction transversale (20) du tracteur (10).

3. Procédé selon la revendication 1 ou 2, **caractérisé en ce que** l'outil porté (22) est amené à pivoter au choix par rapport à l'un de plusieurs axes de pivotement non parallèles (52, 54).

4. Procédé selon au moins l'une des revendications précédentes, **caractérisé en ce qu'**un axe de pivotement (52) est disposé en parallèle à une direction transversale (20) du tracteur (10).

5. Procédé selon au moins l'une des revendications précédentes, **caractérisé en ce qu'**un axe de pivotement (54) est disposé en parallèle à une direction longitudinale (18) du tracteur (10).

6. Procédé selon au moins l'une des revendications précédentes, **caractérisé en ce qu'**en fonction d'un mouvement d'actionnement (X, Y, Z) du levier de commande (50), une position de consigne (P_soll) ou une attitude de pivotement de consigne (N_soll) de l'outil porté (22) est établie en tant que grandeur de consigne.

7. Procédé selon au moins l'une des revendications précédentes, **caractérisé en ce qu'**en fonction d'un mouvement d'actionnement (X, Y, Z) du levier de commande (50), une vitesse de déplacement de consigne (v_soll) de l'outil porté (22) le long de la trajectoire (16, 17, 20) de l'outil porté (22) est établie en tant que grandeur de consigne.

8. Procédé selon la revendication 6 ou 7, **caractérisé en ce qu'**une valeur de la grandeur de consigne (P_soll, N_soll, v_soll) est déterminée en fonction d'un trajet d'actionnement (Δs1, Δs2, Δs3) du levier de commande (50) par rapport à une position neutre sans actionnement (58).

9. Procédé selon au moins l'une des revendications 6 à 8, caractérisé en ce la grandeur de consigne (P_soll, N_soll, v_soll) à établir est fixée en fonction d'un mode de fonction variable (M1, M2).
